## Europäisches Patentamt
## European Patent Office
## Office européen des brevets

(11) Numéro de publication: **0 019 026**
**A1**

---

# DEMANDE DE BREVET EUROPEEN

(21) Numéro de dépôt: **79401080.1**

(22) Date de dépôt: **31.12.79**

(51) Int. Cl.³: **G 02 B 5/16**

---

(30) Priorité: **11.05.79 FR 7912092**

(43) Date de publication de la demande:
**26.11.80 Bulletin 80/24**

(84) Etats Contractants Désignés:
**AT BE CH DE GB IT NL SE**

(71) Demandeur: **SOCIETE INDUSTRIELLE DE LIAISONS ELECTRIQUES - SILEC**
**64bis, rue de Monceau**
**F-75008 Paris(FR)**

(72) Inventeur: **Martin, Charles**
**9, rue des Buttes**
**F-77250 Veneux Les Sablons(FR)**

(74) Mandataire: **Fruchard, Guy**
**CABINET CHEREAU Maximilianstrasse 15**
**D-8000 München 22(DE)**

---

(54) Elément de câblage pour la réalisation d'éléments de câbles unitaires à fibres optiques, et procédé de fabrication.

(57) La présente invention concerne un élément de câblage pour fibres optiques.

Cet élément de câblage comprend une bande de configuration générale plane 1 présentant une pluralité d'alvéoles longitudinales 3 pour recevoir de façon lâche les fibres optiques 4, les alvéoles communiquant avec l'extérieur, en configuration plane de la bande, par des chenaux d'accès 5 dont les faces en regard 7, ainsi que les côtés latéraux 8, 8' de la bande, sont conformés de façon à réaliser un enroulement de la bande 1 sous la forme d'un élément tubulaire creux avec les côtés latéraux 8, 8', solidarisés en contact étanche, les faces 7 des chenaux 5 venant également en contact et fermant ainsi de façon étanche les alvéoles 3 dans lesquelles ont été préalablement introduites, par simple déposition, les fibres optiques. La bande est enroulée en hélice autour d'un élément porteur cylindrique pour constituer un élément de câble unitaire utilisable séparément ou en association avec d'autres éléments pour constituer des câbles à grande capacité.

Application aux télécommunications optiques.

Fig: 1

- 1 -

ELEMENT DE CABLAGE POUR LA REALISATION D'ELEMENTS DE CABLES
UNITAIRES A FIBRES OPTIQUES, ET PROCEDE DE FABRICATION.

La présente invention concerne une structure
support ou élément de câblage pour fibres optiques, pouvant
être utilisé seul ou pour la réalisation de câbles à grand
nombre de fibres optiques, par exemple pour les télécommunications.

La fragilité des fibres optiques, vis-à-vis des
efforts mécaniques tant de traction, de compression que de
torsion, rend difficile et onéreuse la fabrication de câbles
à fibres optiques ayant des caractéristiques de transmission
convenables, et pouvant être raccordées commodément.

Différents types de structures supports ou
d'éléments de câblage ont été proposés, s'inspirant des constructions classiques câblées en introduisant, dans ces structures des éléments porteurs ou de traction pour tenter de
supprimer ou de limiter les efforts mécaniques sur les fibres
et les déformations rédhibitoires qui pourraient en résulter.

Certains fabriquants ont par exemple imaginé des
structures en bandes, dans lesquelles les fibres optiques sont
maintenues entre des films de matière plastique de diverses
natures. Ces structures en bande, à configuration en sandwich,
sont soit enroulées autour d'un noyau porteur, avec un pas
peu différent de la largeur de la bande, soit empilés les unes
sur les autres pour former une structure qui peut être vrillée
sur son axe pour supprimer les efforts mécaniques sur les génératrices comprimées ou tendues en cours de l'enroulement du
câble. La première solution nécessite, lors de la réalisation des structures en bandes, de disposer les fibres optiques individuelles suivant une allure ondulée afin de réduire les micro-courbures lors de l'enroulement final du câble. Outre les difficultés de réalisation, cette technique nécessite une longueur de fibre notablement plus importante que celle du câble final. La seconde solution, quoique offrant des facilités accrues de raccordement, présente certaines difficultés de mise en oeuvre.

On connait également des structures supports complexes et de fabrication délicate dans lesquelles un noyau central cylindrique comporte, le long de génératrices du noyau, des rainures ou des fentes longitudinales dans lesquelles sont logées les fibres optiques revêtues ou non individuellement d'une gaine de protection. Cette structure support ou élément de câblage cylindrique ne permet pas de résoudre les problèmes posés, d'une part, par les contraintes mécaniques lors du câblage final et, d'autre part, en raison des difficultés de raccordement entre des éléments des câblages de ce type.

En effet, les principaux paramètres dont il faut tenir compte pour la réalisation de câbles à fibres optiques, notamment à grande capacité, par exemple pour des liaisons de télécommunication à fort débit, sont les suivants :

- du point de vue mécanique, les fibres optiques actuellement disponibles présentent une charge de rupture relativement élevée, mais, par contre , un allongement pratiquement nul. La structure d'un câble à plusieurs fibres doit donc être telle qu'aucune contrainte mécanique notable, que se soit en tirage en flexion ou en torsion, ne soit appliquée sur les fibres. De plus, des phénomènes de micro-courbures et de micro-ruptures peuvent apparaître sur des fibres soumises à certains types de contraintes mécaniques. Or, il est connu que ces phénomènes entraînent une augmentation très rapide de l'atténuation des signaux optiques injectés dans les fibres et transmis par celles-ci ;

- du point de vue thermique, il est également connu que le pré-gainage des fibres, souvent préconisé pour assurer leur protection mécanique, est une opération extrêmement délicate dans la mesure où elle soumet la fibre, d'une
part à des contraintes mécaniques dangereuses de traction
et de torsion, mais d'autre part, et surtout, à des contraintes thermiques susceptibles d'affecter gravement ses caractéristiques mécaniques et ses caractéristiques de transmission
des signaux optiques. Pour obvier à ces problèmes, il est
donc préférable de recourir à des structures de câbles permettant de supprimer ces opérations de pré-gainage, en évitant
ainsi que les fibres soient soumises à des contraintes thermiques importantes lors de la fabrication du câble ;

      - enfin, du point de vue jointage et raccordement
des fibres entre elles, dans deux éléments de câbles successifs ou sur des équipements d'émission et de réception, il
est également connu que la nature et les dimensions des fibres
optiques nécessitent des systèmes de connexion extrêmement
précis et délicats à réaliser et à mettre en oeuvre. Il est
à cet égard bien moins difficile de réaliser le raccordement
de faisceaux de fibres lorsque celles-ci se présentent sous
la forme de nappes plutôt que suivant une répartition cylindrique ou en couches cylindriques successives.

      La présente invention a précisément pour objet
un nouveau type d'élément de câblage et de câble à fibres optiques apportant des solutions satisfaisantes aux problèmes
évoqués ci-dessus.

      Un autre objet de la présente invention est de
prévoir un élément de câblage de fibres optiques de faible
coût de revient, de mise en oeuvre aisée, permettant la réalisation d'éléments de câbles unitaires ou de câbles à grande capacité en limitant considérablement les contraintes mécaniques susceptibles d'être induites dans les fibres.

      Un autre objet encore de la présente invention
est de prévoir un nouveau type d'élément de câble unitaire
ou de câble à fibres optiques ayant des dimensions faibles
pour un nombre de fibres donné.

      Pour ce faire, selon une caractéristique de la
présente invention, on prévoit un élément de câblage pour

fibres optiques, du type comprenant un corps allongé présentant une série de logements longitudinaux pour recevoir des fibres optiques, le corps allongé étant constitué d'une bande de configuration générale plane, réalisée en une matière plastique déformable, cette bande présentant une première face sensiblement plane, des premier et second côtés latéraux, une série d'alvéoles longitudinales, parallèles entre elles, disposées sensiblement suivant une ligne transversale de la bande et débouchant dans la seconde face de celle-ci par un chenal d'accès, deux chenaux adjacents définissant un élément de nervure longitudinal, les faces de chaque chenal étant conformées de façon à venir en contact l'une avec l'autre, après enroulement de la bande autour d'un axe longitudinal pour amener les premier et second côtés latéraux en contact, en réalisant ainsi une structure tubulaire creuse avec une série d'alvéoles fermées réparties sensiblement suivant une disposition circulaire.

Selon une autre caractéristique de la présente invention, on prévoit un élément de câble unitaire à fibres optiques réalisé à partir d'un tel élément de câblage, enroulé autour d'un élément porteur cylindrique à résistance de traction élevée, au moins une partie des alvéoles renfermant chacune de façon lâche une fibre optique.

Selon une caractéristique importante de la présente invention, un procédé de fabrication d'un tel élément de câble comporte les étapes suivantes :

- extrusion de la bande alvéolée ;

- refroidissement et séchage de la bande ;

- enroulement de la bande sur un tambour ;

- reprise de la bande ;

- ouverture des alvéoles et insertion des fibres optiques dans celles-ci ;

- fermeture des alvéoles par déformation transversale de la bande ; et

- enroulement en hélice de la bande, munie de s fibres optiques, autour de l'élément porteur.

Selon encore une autre caractéristique de la pr

0019026

.sente invention, on prévoit un embout d'extrémité pour les éléments de câbles ainsi réalisés, cet embout comprenant un corps présentant une première partie d'extrémité tubulaire susceptible d'être bridée sur l'extrémité de l'élément de câble, et une seconde partie d'extrémité de section sensiblement rectangulaire, la cavité interne du corps présentant, au moins au niveau de cette seconde partie d'extrémité, une paroi plane sur laquelle porte la face extérieure de l'extrémité de la bande déroulée à plat, cette bande étant maintenue à plat par des éléments de nervure s'étendant transversalement dans la cavité du corps.

La présente invention permet ainsi d'allier les avantages des structures cylindriques, en ce qui concerne notamment l'utilisation des machines classiques dans le domaine de la câblerie, et ceux des structures en ruban, notamment la pose aisée des fibres et, comme précédemment mentionné, les contraintes mécaniques extrêmement limitées, ainsi que les facilités de raccordement en extrémité des câbles, en supprimant la majeure partie des inconvénients qui présentent ces différentes structures utilisées en elles-mêmes.

D'autres caractéristiques et avantages de la présente invention ressortiront de la description suivante de modes de réalisation, donnés à titre illustratif mais nullement limitatif faite en relation avec les dessins annexés, sur lesquels :

La figure 1 représente, en coupe transversale, un élément de câblage sous forme de rubans alvéolés conformément à la présente invention ;

La figure 2 représente un élément de câble unitaire obtenu par enroulement de la bande de la figure 1 ;

La figure 3 représente schématiquement les étapes du procédé de fabrication de la bande de la figure 1 ;

La figure 4 représente schématiquement le procédé de réalisation de l'élément de câble unitaire de la figure 2 à partir de la bande selon la figure 1 obtenue par le procédé de la figure 3 ;

La figure 5 représente, en coupe longitudinale, un mode de réalisation de la filière de conformation et d'enroulement du ruban ayant reçu ses fibres optiques utilisée dans le procédé de la figure 4 ;

La figure 6 représente de façon schématique, en coupe longitudinale, un mode de réalisation de l'embout d'extrémité pour un élément de câble obtenu par le procédé de la figure 4 ;

La figure 7 représente en coupe transversale un mode de réalisation de câble à fibres optiques utilisant des éléments de câble selon la figure 2 ; et

La figure 8 représente un autre mode de réalisation d'un câble à fibres optiques obtenu à partir d'éléments de câblage selon la figure 1.

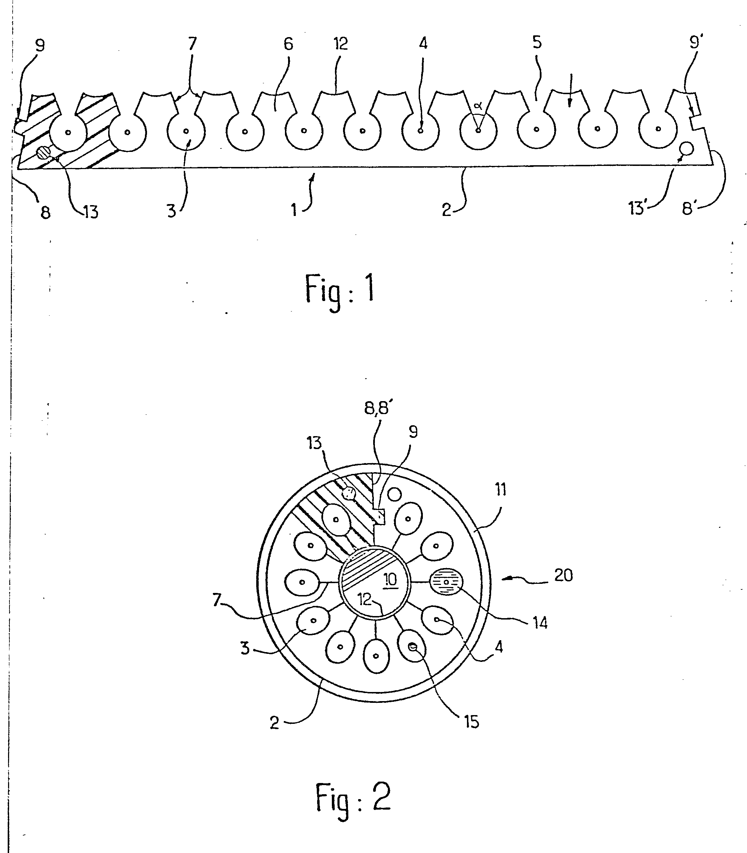

L'élément de câblage selon la présente invention, tel que représenté sur la figure 1, se présente sous la forme d'une bande de configuration générale plane, référencée 1, comportant une première face plane 2 et une série d'alvéoles longitudinales 3 disposées suivant une ligne transversale, parallèles entre elles , destinées à recevoir les fibres optiques 4. Les alvéoles 3 ont une section qui est grande devant celle des fibres optiques 4 de façon que celles-ci puissent être logées de façon lâche dans les alvéoles. Les alvéoles peuvent présenter une section de forme quelconque, de préférence élliptique ou cylindrique, le diamètre des alvéoles étant compris entre environ 5 et 10 fois le diamètre des fibres.

Chaque alvéole débouche dans la face supérieure de la bande opposée à la face plane 2 par un chenal d'accès 5, deux chenaux adjacents délimitant un élément de nervure longitudinal 6, les faces d'extrémité des éléments de nervures s'étendant sensiblement dans un plan parallèle à celui de la face plane 2. Chaque chenal présente une forme générale en trapèze, les faces en regard 7 d'un chenal divergeant vers l'extérieur d'un angle voisin de $360°/n$, $n$ étant le nombre d'alvéoles longitudinales de la bande. De façon similaire, la bande présente en section transversale une configuration sensiblement trapézoïdale avec les premier et second côtés latéraux 8, 8', convergeant vers le haut à partir de la face plane 2. Avec cette configuration, il est ainsi possible d'enrouler la bande 1 autour d'un axe longitudinal pour amener les côtés latéraux 8, 8' en contact l'un avec l'autre et réaliser une structure tubulaire creuse représentée sur la figure 2. Lors de la déformation de la bande pour aboutir à cette configuration enroulée, les faces 7 des chenaux 5 viennent en contact de pression l'une contre l'autre, en fermant ainsi de façon étanche les alvéoles 3, comme représenté sur la figure 2. Les côtés latéraux 8 et 8' de la bande 1 comportent avantageusement chacun des moyens d'engagement complémentaires, par exemple du type à tenon et mortaise ou à rainure et languette, comme représenté en 9 et 9' sur la figure 1.

De façon plus spécifique, comme représenté sur la figure 2, après la pose des fibres optiques 4 dans les alvéoles 3 par les chenaux d'accès 5, la bande 1 est enroulée en hélice autour d'un élément porteur cylindrique central 10 et maintenue dans sa configuration tubulaire autour du porteur par accrochage et collage des bords latéraux 8 et 8' et par une gaine 11 réalisée par exemple par rubannage. Pour assurer une étanchéité parfaite, les faces 7 des chenaux 5 peuvent être enduites d'un adhésif. Pour réaliser un ajustement juste sur le porteur central 10, les éléments de nervure 6 ont leurs faces externes 12 avantageusement conformées en arc de cercle, de rayon correspondant à celui du porteur central 10.

La bande 1 est avantageusement réalisée en polyoléfine ou en polyamide massif ou cellulaire, par extrusion, le porteur central étant réalisé en un matériau à résistance de traction élevée, par exemple celui vendu commercialement sous l'appellation Kevlar ou tout autre matériau présentant les qualités de souplesse et de résistance mécanique requises. Comme on le voit sur les figures 1 et 2, la bande 1 comporte avantageusement des éléments de traction 13, 13' noyés dans le matériau de la bande, pour en faciliter l'extrusion et le transport. Les éléments de renforcement 13, 13' peuvent être constitués de fils métalliques, de fibres du produit dit Kevlar ou de fibres de verre. A titre d'exemplification, la bande 1 a une largeur déterminée pour la constitution d'éléments de câblage unitaires, ayant un diamètre compris entre environ 7 et 70 mm, de préférence de l'ordre de 10 à 20 mm. Pour une bande de largeur comprise entre 15 et 20 mm, la distance entre les axes des alvéoles 3 est choisie de l'ordre de 2 à 2,5 mm.

Comme représenté sur la figure 2, les alvéoles 3 sont avantageusement remplies, lors de la constitution de l'élément de câble unitaire, d'un matériau 14 qui peut être soit un liquide adaptateur d'indice soit un matériau destiné à assurer l'étanchéité longitudinale des câbles, par exemple une huile silicone comme il est connu dans la technique des câbles à fibres optiques. De même, comme représenté sur la figure 2, au moins une des alvéoles peut recevoir en place et lieu d'une fibre optique un conducteur électrique métallique 15, sous la forme d'un conducteur unique, de paires ou de quartes, revêtu d'un matériau isolant, et destiné à l'alimentation de répéteurs le long de la ligne de transmission ou à l'acheminement de divers signaux électriques, tout en assistant ou remplaçant les moyens de traction.

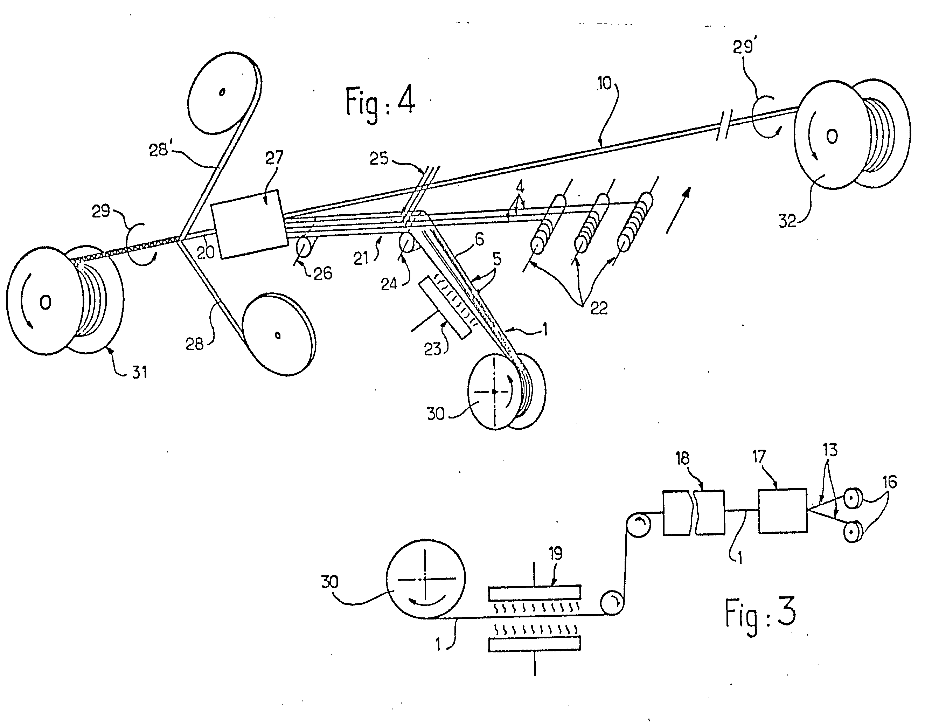

On a représenté sur les figures 3 et 4, les deux parties du dispositif de mise en oeuvre du procédé de fabrication de câbles à partir des rubans de la figure 1, selon la présente invention. Le dispositif est scindé en deux parties distinctes, à savoir l'unité de fabrication de la bande représentée sur la figure 3, et l'unité de mise en place de fibres optiques et de câblage proprement dite, représentée sur la figure 4, la séparation en deux des unités permettant de minimiser les incidents dûs à la rupture d'une fibre et d'effectuer de façon simple les opérations de changement de bobines porte-fibres et de collage ou de soudure du câble.

Dans l'unité de fabrication de la bande représentée sur la figure 3, les éléments de traction 13 dévidés à partir de bobines 16 sont introduits dans une tête d'extrusion 17 du matériau constitutif de la bande 1, par exemple une polyoléfine, le profil extrudé ou bande 1 incluant les éléments de traction étant refroidi dans un bac 18 puis séché en un poste de séchage 19, de préférence au moyen de jets d'air chaud, la bande refroidie et séchée étant réceptionnée et enroulée sur un tambour de stockage 30.

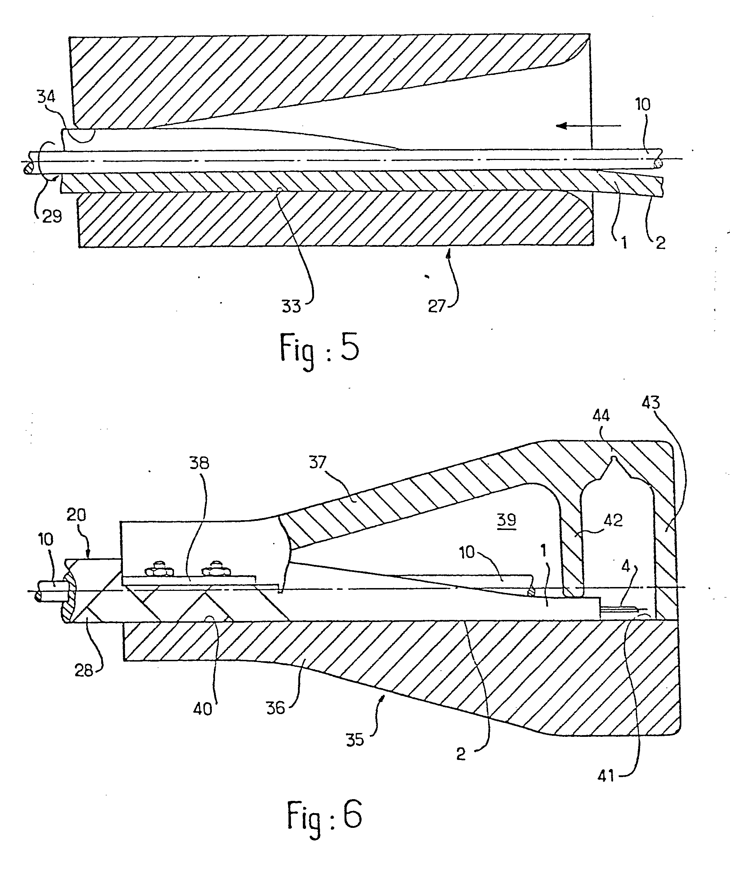

Dans l'unité de câblage représentée sur la figure 4, on reconnait le tambour de stockage 30, dont la bande 1 est dévidée pour être amenée à un poste de réception 21 des fibres optiques 4, elles-mêmes dévidées à partir de tambours de stockage 22. Avant d'arriver au poste de dépôt 21 la bande 1 passe devant un poste 23 où elle est pré-chauffée par exemple par des jets d'air chaud, et/ou étirée afin d'éviter ultérieurement des tractions nuisibles sur les fibres. Au poste de déposition 21, la bande 1 passe sur un rouleau convexe 24 de sorte que la bande est déformée pour ouvrir davantage les chenaux 5 d'accès aux alvéoles 3. Les fibres 4 sont alors déposées dans les alvéoles, soit au moyen de jets d'air ou à l'aide de tubes capillaires, comme figuré en 25. La bande 1, avec les fibres reçues dans les alvéoles 3, passe ensuite sur un rouleau concave 26 réalisant une déformation de la bande tendant à réduire la largeur des chenaux 5, cette bande ainsi partiellement pré-enroulée étant mise en forme et enroulée autour du porteur central 10, préalablement enduit d'un adhésif adéquat, dans un dispositif à filière de conformation et d'enroulement 27 représentée plus en détail sur la figure 5. A la sortie de l'enrouleur 27, l'élément unitaire de câble 20 reçoit un gainage constitué par des rubans disposés en hélice 28, 28' avant d'être réceptionné sur un tambour de stockage 31. Comme figuré par les flèches 29 et 29', le porteur central 10, ainsi que son tambour d'approvisionnement 32 et son tambour de réception 31, sont soumis à un mouvement de rotation autour de l'axe principal du porteur central pour conférer, comme sus-mentionné, à l'élément unitaire de câble 20 une torsion de pas très grand vis-à-vis du diamètre des fibres. Typiquement, le pas de torsion est déterminé de façon qu'une génératrice de référence de l'élément de câble unitaire, par exemple la jonction entre les faces 8, 8', tourne de 360° tous les quatre mètres de longueur de câble.

Comme représenté sur la figure 5, la filière du dispositif de mise en forme et d'enroulement 27 présente une forme générale convergente avec une paroi d'appui 33 initialement plane et se raccordant continûment à une extrémité circulaire 34 de la filière de façon que la bande 1 portant sur la face 33 par sa face plane inférieure 2, ait ses bords progressivement relevés vers le haut, comme représenté au milieu de la figure 5, puis se refermant pour venir jointifs à la sortie de la filière 34.

On a représenté sur la figure 6, un embout d'extrémité pour l'élément de câble unitaire 20 agencé de façon à présenter les différentes fibres optiques constitutives du câble sous une forme plane, c'est-à-dire en nappe, afin de faciliter, comme sus-mentionné, les opérations de raccordement entre les fibres entre elles ou à des dispositifs d'émission et de réception. On reconnait sur la figure 6, l'extrémité de l'élément unitaire de câble 20 avec son rubannage 28 et le porteur central 10. L'embout d'extrémité, généralement référencé 35, se présente sous la forme d'un corps creux constitué d'une demi-coquille inférieure 36 et d'une demi-coquille supérieure 37 assemblées ensemble au moyen de brides 38 permettant également de brider l'extrémité du câble 20 à l'intérieur de l'embout 35. Les deux demi-coquilles 36 et 37 forment une cavité intérieure 39 dont la forme évolue progressivement depuis une première extrémité cylindrique amont 40 vers une seconde extrémité opposée en aval, de forme quadrangulaire, par exemple rectangulaire.

Comme on le voit sur la figure 6, à l'inverse de l'opération d'enroulement représentée sur la figure 5, le câble cylindrique 20 est déroulé, en aval de sa fixation dans la partie extrémité cylindrique 40, pour ramener la bande 1 à plat avec sa face extérieure 2 en appui sur une face plane interne d'extrémité 41 de l'embout. La bande 1 est maintenue plaquée à plat contre la face 41, avec les fibres optiques 4 se présentant sous forme de nappe, au moyen d'éléments de nervures 42 solidaires de la seconde demi-coquille 37 et s'étendant tranversalement au travers de la cavité interne 39. L'embout représenté sur la figure 6, permettant la transformation de l'élément de câble unitaire cylindrique en structure plane, et offrant ainsi un accès aisé à chacune des fibres en vue de leur mesure ou de leur raccordement, est donné à titre illustratif mais peut être extrapolé en vue du raccordement de deux tronçons de câbles, l'embout pouvant inclure un système de raccordement des différents éléments de transmission ou des moyens de solidarisation à un tel système de raccordement. Dans la configuration d'embout passif représentée sur la figure 6, la seconde demi-coquille 37 comporte une paroi d'extrémité 43 fermant la cavité interne 39 et protégeant les extrémités des fibres 4, cette paroi d'extrémité 43 pouvant être par exemple raccordée au corps de la demi-coquille par une zone à casser 44 en vue de donner accès aux fibres 4 pour leur raccordement ou les opérations de mesure.

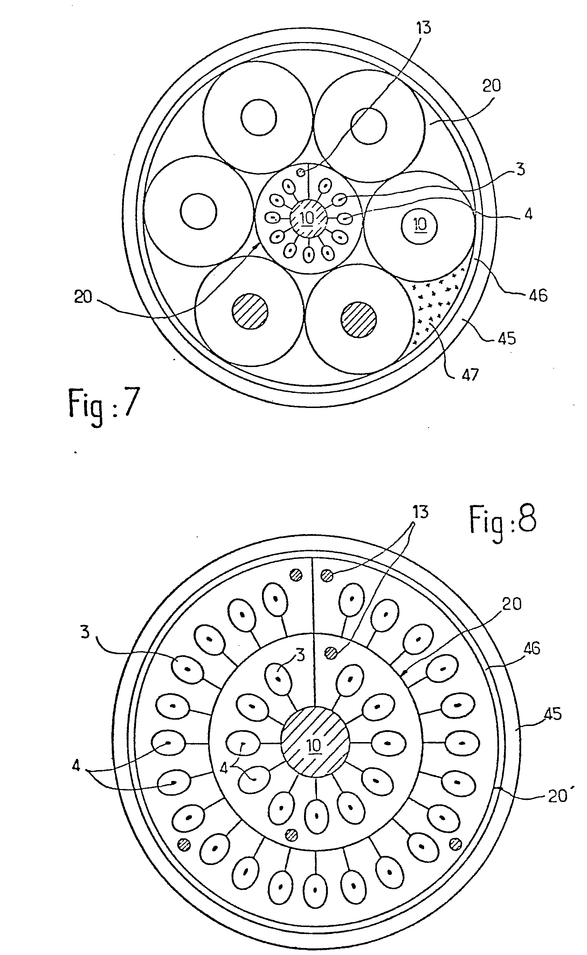

On a représenté sur les figures 7 et 8, deux modes de réalisation d'un câble à grande capacité utilisant des éléments de câbles unitaires du type de celui représenté sur la figure 2 obtenu à partir des bandes représentées sur la figure 1. Dans le câble de la figure 7, un jeu de six éléments de câbles unitaires 20 sont angulairement répartis autour d'un élément de câble unitaire 20 central, le faisceau des éléments de câbles unitaires 20, éventuellement torsadé, étant recouvert d'une gaine en matière thermoplastique 45, par exemple en polyéthylène, qui peut être associée à une gaine interne ou barrière métallique 46, par exemple en aluminium. La gaine extérieure peut elle-même comporter des éléments de traction et/ou être revêtue des moyens nécessaires à la protection mécanique du câble et/ou pour empêcher la pénétration de l'humidité dans ce câble selon des techniques connues, un matériau de remplissage ou gaine de bourrage 47, par exemple en polyéthylène, assujettissant les éléments unitaires entre eux. Un tel câble peut ainsi comporter de 70 à 80 fibres optiques pour un diamètre hors tout inférieur à 25 mm.

Dans le mode de réalisation de la figure 8, un second élément unitaire de câble 20 est enroulé concentriquement autour d'un élément unitaire de câble 20 analogue à celui représenté sur la figure 2, ce dernier se comportant, pour le second élément unitaire 20', comme l'élément porteur central 10 pour le premier élément unitaire 20. Le câble de la figure 8 est également complété par des gainages externes 45 et 46.

Avec les câbles du type de ceux représentés sur les figures 7 et 8, chaque élément unitaire, à l'extrémité du câble est déroulé, avec sa bande à plat, et équipé d'un embout d'extrémité du type de celui représenté sur la figure 6.

Quoique la présente invention ait été décrite en relation avec des modes de réalisation particuliers, elle ne s'en trouve pas limitée mais est au contraire susceptible de variantes et de modifications qui apparaîtront à l'homme de l'art.

REVENDICATIONS

1 - Elément de câblage pour fibres optiques, comprenant un corps allongé présentant une série de logements longitudinaux pour recevoir les fibres optiques, caractérisé en ce qu'il est constitué d'une bande de configuration générale plane, réalisée en une matière plastique déformable, cette bande présentant une première face sensiblement plane, des premier et second côtés latéraux, une série d'alvéoles longitudinales, parallèles entre elles, disposées sensiblement suivant une ligne transversale et débouchant chacune dans la seconde face par un chenal d'accès, deux chenaux adjacents définissant un élément de nervure longitudinal, les faces en regard de chaque chenal étant conformées de façon à venir en contact l'une avec l'autre, après enroulement de la bande autour d'un axe longitudinal pour amener les premier et second côtés latéraux en contact, en réalisant ainsi une structure tubulaire creuse avec une série d'alvéoles fermées réparties sensiblement suivant une disposition circulaire.

2 - Elément de câblage selon la revendication 1, caractérisé en ce que les alvéoles ont une section transversale grande devant celle des fibres optiques.

3 - Elément de câblage selon la revendication 1 ou la revendication 2, caractérisé en ce que les chenaux ont une forme générale en trapèze, les faces en regard de chaque chenal divergeant vers l'extérieur d'un angle α égal à envi- ron 360°/n, n étant le nombre d'alvéoles de la bande.

4 - Elément de câblage selon la revendication 3, caractérisé en ce que la face externe de chaque élément de nervure longitudinal est conformée en arc de cercle de rayon correspondant au rayon interne de la structure tubulaire creuse finale.

5 - Elément de câblage selon l'une quelconque des revendications précédentes, caractérisé en ce que la bande est réalisée par extrusion d'un matériau polymère.

6 - Elément de câblage selon l'une quelconque des revendications précédentes, caractérisé en ce qu'il com- prend au moins un élément de traction longitudinal noyé dans la bande.

7 - Elément de câble unitaire à fibres optiques, caractérisé en ce qu'il comprend un élément de câblage selon l'une quelconque des revendications 1 à 6, enroulé autour d'un élément porteur cylindrique à résistance de traction élevée, avec une torsion autour de l'axe de cet élément porteur cylindrique présentant un pas important devant le diamètre des fibres optiques, au moins une partie des alvéoles renfermant chacune de façon lâche une fibre optique.

8 - Elément de câble unitaire selon la revendication 7, caractérisé en ce que les premier et second côtés latéraux de la bande sont solidarisés de façon étanche.

9 - Elément de câble unitaire selon la revendication 8, caractérisé en ce que les premier et second côtés latéraux de la bande comportent des moyens d'engagement complémentaires.

10 - Elément de câble unitaire selon l'une quelconque des revendications 7 à 9, caractérisé en ce que les alvéoles sont remplies d'un liquide adaptateur d'indice.

11 - Elément de câble unitaire selon l'une quelconque des revendications 7 à 9, caractérisé en ce que les alvéoles sont remplies d'un matériau destiné à assurer l'étanchéité longitudinale de l'élément de câble.

12 - Elément de câble unitaire selon l'une quelconque des revendications 7 à 11, caractérisé en ce qu'il est recouvert d'au moins une gaine de protection.

13 - Elément de câble unitaire selon l'une quelconque des revendications 7 à 12, caractérisé en ce qu'au moins une des alvéoles contient un conducteur métallique allongé.

14 - Câble à fibres optiques, notamment pour transmissions, caractérisé en ce qu'il comprend plusieurs éléments de câbles unitaires selon l'une quelconque des revendications 7 à 13, juxtaposés suivant une répartition angulaire.

15 - Câble à fibres optiques, notamment pour transmissions, caractérisé en ce qu'il comprend au moins deux éléments de câbles unitaires selon l'une quelconque des revendications 7 à 13, enroulés concentriquement.

16 - Procédé de fabrication d'un élément de câble unitaire selon l'une quelconque des revendications 7 à 13, caractérisé en ce qu'il comporte les étapes suivantes :

- extrusion de la bande alvéolée incorporant des éléments de traction ;

- refroidissement et séchage de la bande ;

- enroulement de la bande sur un tambour de stockage ;

- reprise de la bande depuis le tambour de stockage et pré-chauffage de la bande ;

- ouverture des alvéoles, par déformation transversale de la bande, et insertion dans celles-ci des fibres de verre ;

- fermeture des alvéoles par déformation transversale de la bande ;

- enroulement en hélice à très grand pas de la bande, munie de ses fibres, autour de l'élément porteur ; et

- pose de gaine de protection et réception sur un tambour.

17 - Procédé selon la revendication 16, caractérisé en ce qu'après la reprise de la bande, celle-ci est en outre pré-étirée.

18 - Embout d'extrémité pour élément de câble unitaire selon l'une quelconque des revendications 7 à 13, comprenant un corps composite creux, présentant une première partie d'extrémité tubulaire susceptible d'être bridée sur l'extrémité de l'élément de câble unitaire, caractérisé en ce que le corps présente une seconde partie d'extrémité de section sensiblement quadrangulaire, la cavité interne du corps présentant, au moins au niveau de cette seconde partie d'extrémité, une paroi interne plane sur laquelle la première face de l'extrémité de la bande déroulée à plat et destinée à venir porter, la bande étant maintenue à plat sur cette paroi plane par des éléments de nervure solidaires du corps et s'étendant transversalement dans la cavité.

Fig: 1

Fig: 2

Fig : 4

Fig : 3

0019026

Fig : 5

Fig : 6

001902€

Fig : 7

Fig :8

€

## DOCUMENTS CONSIDERES COMME PERTINENTS

| Catégorie | Citation du document avec indication. en cas de besoin. des parties pertinentes | Revendica-tion concernee |
|---|---|---|
| | FR - A - 2 319 912 (L.T.T.)<br><br>* Page 3, lignes 21-36; page 4 *<br>-- | 1,2,7, 10 |
| | DE - A - 2 509 547 (SIEMENS)<br><br>* Revendications *<br>-- | 1,12 |
| | FR - A - 2 381 326 (L.T.T.)<br><br>* Page 3, figures *<br>-- | 1,7,11, 12 |
| | IBM TECHNICAL DISCLOSURE BULLETIN, vol. 20, no. 10, mars 1978 NEW YORK (US) E.C. UBERBACHER: "Optical fiber ribbon cable", page 4054<br>* En entier *<br>-- | 1,2,16 |
| | DE - A - 2 606 777 (SIEMENS)<br><br>* Page 5; page 6, lignes 1-8 *<br>-- | 10,11, 13 |
| | DE - A - 2 507 648 (SIEMENS)<br><br>* Revendications; figures 5,6,7 *<br>---- | 1 |

**CLASSEMENT DE LA DEMANDE (Int. Cl )**

G 02 B 5/16

**DOMAINES TECHNIQUES RECHERCHES (Int. Cl. ³)**

G 02 B 5/16

**CATEGORIE DES DOCUMENTS CITES**

X: particulièrement pertinent
A: arriere-plan technologique
O: divulgation non-écrite
P: document intercalaire
T: théorie ou principe à la base de l'invention
E: demande faisant interference
D: document cite dans la demande
L: document cite pour d'autres raisons

&: membre de la même famille. document correspondant

Le présent rapport de recherche a été établi pour toutes les revendications

| Lieu de la recherche | Date d'achèvement de la recherche | Examinateur |
|---|---|---|
| La Haye | 19.08.1980 | PFAHLER |

OEB Form 1503.1  06.78